# EUROPEAN PATENT APPLICATION

(11) **EP 1 271 910 A1**
(43) Date of publication of application: **02.01.2003**
(21) Application number: 01440183.0
(22) Date of filing: 21.06.2001
(51) Int. Cl.: H04M 7/00

(54) **Communication system with internal packet switching and method for transmitting and switching data using said system**

(71) Applicant: ALCATEL, 75008 Paris (FR)
(72) Inventor: Mouton, Michel, 67100 Strasbourg (FR); Gass, Raymond, 67150 Bolsenheim (FR)
(74) Representative: Menzietti, Domenico, Dipl.-Ing.

(57) **Abstract**

The present invention concerns a communication system able to connect at least two voice and/or data communication terminals, linked to said system directly or through an external, local or national communication network.

Communication system characterised in that said system (1) comprises means (3, 4, 5, 6) for switching and transmitting internally all data in the form of data packets.

## Description

The present invention is generally related to the transmission of voice and data in communication devices and networks, and concerns a communication system for the transmission of voice data and a method for transmitting and switching data using said system.

Communication units like PBX or PABX units (Private - Automatic - Branch Exchange) are more and more obliged to handle data in packet form, especially with the increasing use of IP-based communications.

However, hybrid circuit/packet switching for IP-PBXs (internet protocol based private branch exchange) need to have a common format for interworking.

As classical solutions are nowadays still based on the use of circuits, it results in extra costs for the gateways used for the conversion IP packets/circuits.

Indeed, IP-PBX are emerging while the IP transport is only proposed at the edge (between a dedicated telephone set and the system, or between systems) and therefore internal switching is still circuit based, with dual gateways between IP sets.

Considering this situation, there is a need for reducing costs and complexity of such communication units and also for improving the overall voice quality by avoiding bidirectional conversion of high quality voice data.

The main object of the present invention is to answer this need.

To that purpose, the present invention concerns a communication system able to connect at least two voice and/or data communication terminals, linked to said system directly or through an external, local or national communication network, characterised in that said system comprises means for switching and transmitting internally all data in the form of data packets.

This invention also concerns a method for transmitting and switching data between at least two voice and/or non voice data communication terminals linked to an interconnecting communication system, directly or through an external, local or national communication network, wherein said method consists in switching and transmitting, inside said system, all data in the form of data packets.

The present invention will be better understood thanks to the following description and drawings of embodiments of said invention given as non limitative examples thereof.

In the accompanying drawings:
Figures 1A and 1B are symbolic illustrations of possible embodiments of the physical architecture of the communication system according to the invention;
Figure 2 is a schematic block diagram of the controller module belonging to the communication system according to the invention;
Figures 3 and 4 are schematic block diagrams of the voice line and data line modules respectively, belonging to the system of the invention, and,
Figures 5A and 5B are schematic diagrams of two embodiments of the connection means of the peripheral line boards of the communication system.

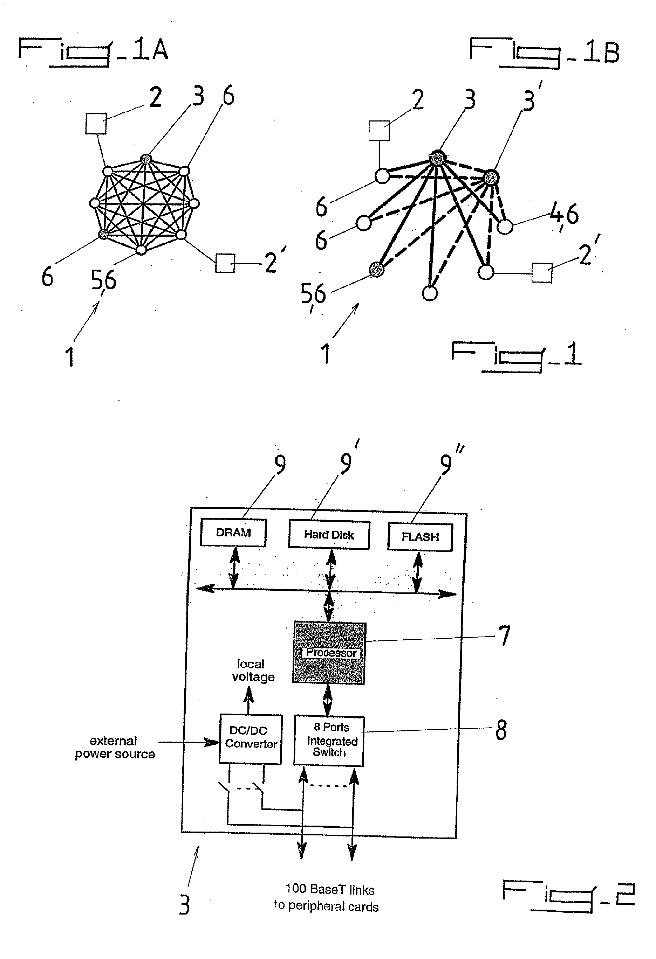

As shown on the figures 1 of the enclosed drawings, the communication system 1 connects at least two voice and/or data communication terminals 2 and 2', linked to said system directly or through an external, local or national communication network.

According to the invention, said system 1 comprises means 3, 4, 5, 6 for switching and transmitting internally all data in the form of data packets.

As can be seen, the basic idea of the invention is the use of packet switching implemented even for those packets which carry voice. Preferably, the packet switch is implemented with classical, low cost components and switch technology that are used to build a LAN (Local Area Network) switch.

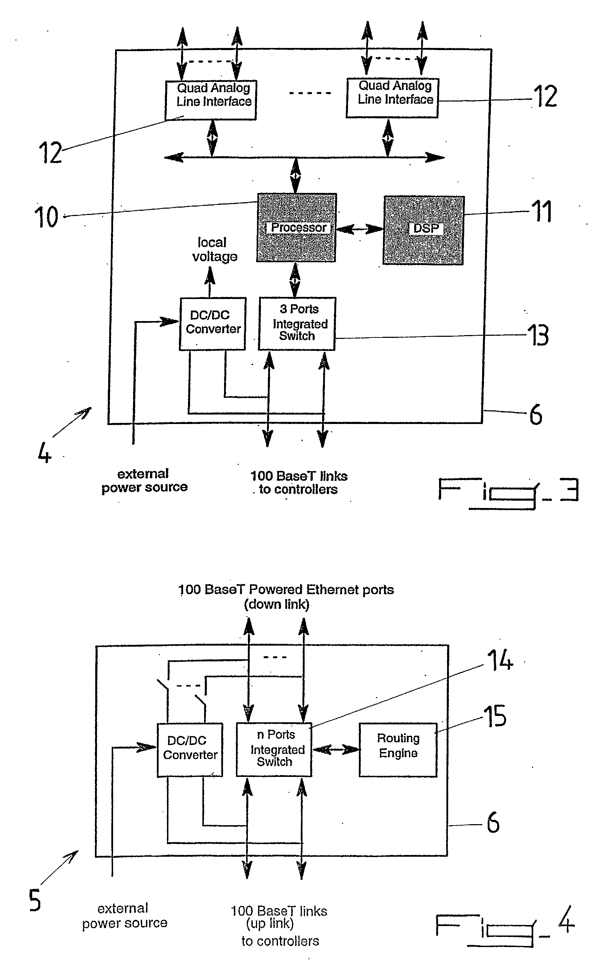

In its basic architecture and structure, the communication system comprises a controller module 3, preferably implemented on a corresponding board, and a plurality of peripheral line boards 6, said controller module 3 being mainly composed of a processor 7 associated with a multiport integrated switch 8 and memory and data storage means 9, 9', 9" and providing the packet switch function and other shared functions of the communication system 1 (figures 1A, 1B and 2).

According to a first structural embodiment, the line boards 6 can be fully interconnected, with full switching capacity on each of said line boards 6 (figure 1A).

In accordance with a second structural embodiment, the line boards 6 can be partially interconnected in a star configuration, with the switching function implemented on a single board 6 only (figure 1B).

Following a third structural embodiment, the line boards 6 can be partially interconnected in a double star configuration, the communication system 1 comprising a main controller module 3 and a standby controller module 3' and a fractional switching function being implemented on said line boards 6 (figure 1B).

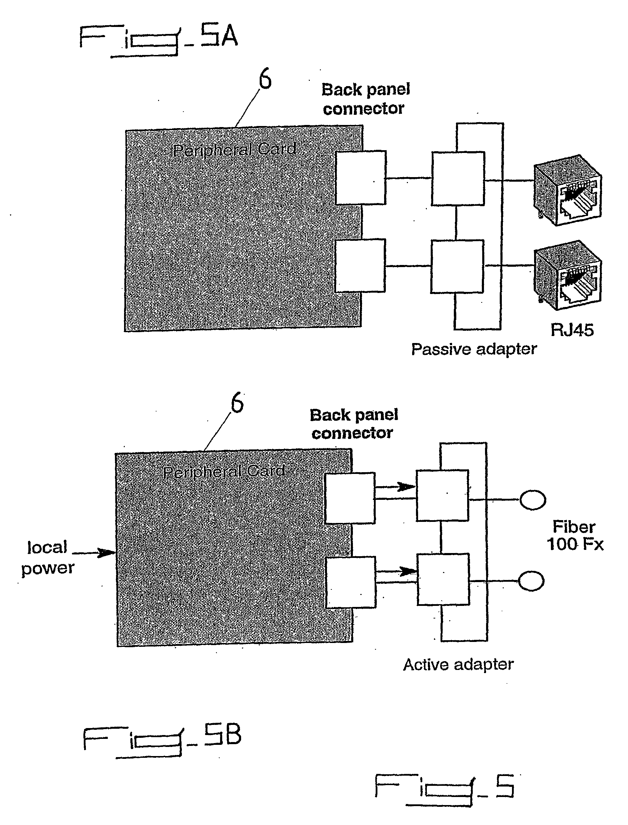

According to an advantageous feature of the invention, the communication system 1 may comprise at least one voice line module 4, preferably implemented on a corresponding board 6, providing voice coding and packetisation functions and mainly composed of a processor 10 associated with a digital signal processor 11, analog line interfaces 12 and a multiport integrated switch 13 (figures 1A, 1B and 3).

Preferably, said system 1 also comprises at least one data line module 5, preferably implemented on a corresponding board 6, providing connection for Data Terminal Equipment or IP telephone sets and mainly composed of a multiport integrated switch 14 associated with a routing engine 15 (figures 1A, 1B and 4).

In relation with the figures of the enclosed drawings, one particular but not limiting example of a practical embodiment of the invention will now be described hereinafter.

The preferably used LAN switch technology is based on a star topology (single or double) that can be implemented on a fully meshed technology (like the so-called "Crystal" technology), or on a simplified back panel.

The architecture is based on full or partial interconnection of the line boards 6, with point to point links and distributed packet switching. The links forming the internal transmission means of the system 1 are running standard 10/100/1000 Base-T Ethernet. Packet switching is implemented in integrated LAN switch on each board 6.

The described and shown example is based on the interconnection of 8 boards (seven line boards 6 and one controller board 3). The proposed architecture is scalable and can be implemented in different configurations such as high capacity system (up to 32 boards), cluster configuration with remote units or network configuration.

Depending on traffic needs and fault tolerance, three different solutions can be proposed, that are based on the same concept:
- star solution, with LAN switch function implemented on a single board (see figure 1A: continuous lines);
- double star solution, where only a 3 part switch is needed on the line boards (see fig. 1B: continuous and dotted lines);
- fully meshed solution, with full capacity LAN switch on the peripheral boards (see fig. 1A as an example for the 8 ports configuration).
The proposed solution can be used:
- for VoIP (Voice over IP) terminals: the line board is nothing more than a hub;
- for legacy terminals: the gateway is implemented in the line board as described later;
- for data equipment that also make use of the hub line board.

Shared functions like LAN switch are implemented by a controller module 3 on a so-called "controller" board. This board performs functions like LAN switch, call handling processing, gateway with legacy boards (circuit based), MCU, etc.

The link between any line board 6 and the controller board(s) 3, 3' is an Ethernet link.

Figure 3 shows a voice line board with 16 ports and a DSP 11 (4 channels) associated to a processor 10 to handle voice coding and packetization.

Figure 4 shows a data line board 6 used for the connection of Data Terminal Equipment, or IP Telephone sets. This example shows 12 links towards terminal equipment, and 2 links for the controller 3 and its backup 3'.

The peripheral boards 6 including modules 3 and 4 perform gateway and hub functions, and the controller 3 performs LAN switch functions.
Thus, several physical implementations can be proposed:
- centralized implementation: the line boards 6 and the controller(s) 3, 3' are in the same shelf and make use of the fully meshed or simplified so-called Crystal technology;
- distributed implementation: the line boards 6 and the controller 3 are geographically separated, interconnected by Ethernet cables. They can be offered individually, incorporated in pizza boxes, or included in existing hardware. In this particular case, remote powering is particularly useful (see figure 5A. On the other hand, local powering feature is used for optical Ethernet infrastructure (see figure 5B).

The proposed architecture is flexible, open, preferably based on high volume standard Ethernet components and makes use of standard protocols. It can be cost optimized for each size of system or configuration.

Among the main advantages of the solution proposed by the invention, one can notice:
- Circuit switch components are dedicated, low volume compared to LAN switch components.
- Gateways are only implemented when needed. This reduces costs and improves overall voice quality.
- The solution can be centralized or distributed.
- It can benefit of existing data equipment infrastructure (cabling, cabinets, management, etc), for example of the PBX or the PABX in which it is incorporated.

The proposed solution makes it also possible to avoid the use of separate clock and frame synchronisation signals that are mandatory in the circuit switch solutions.

It should also be underlined that the proposed solution is fully compatible with existing A4400 products of the applicant. The new peripheral boards 6 and the new controller boards 3, 3' can live in an existing Crystal type backplane. Interworking with legacy boards is performed by a gateway that can be located on the controller board 3 or on a dedicated board 6.

Another object of the present invention is a method for transmitting data between at least two voice and/or non voice data communication terminals 2, 2' linked to an interconnecting communication system 1, directly or through an external, local or national communication network, wherein said method consists in switching and transmitting, inside said system 1, all data in the form of data packets.

Preferably, the communication system used for implementing said method corresponds to a communication system 1 as described before.

The present invention is, of course, not limited to the preferred embodiments described and represented herein, changes can be made or equivalents used without departing from the scope of the invention.

## Claims

1. Communication system able to connect at least two voice and/or data communication terminals, linked to said system directly or through an external, local or national communication network, **characterised in that** said system (1) comprises means (3, 4, 5, 6) for switching and transmitting internally all data in the form of data packets.

2. Communication system according to claim 1, **characterised in that** it comprises a controller module (3), preferably implemented on a corresponding board, and a plurality of peripheral line boards (6), said controller module (3) being mainly composed of a processor (7) associated with a multiport integrated switch (8) and memory and data storage means (9, 9', 9") and providing the packet switch function and other shared functions of the communication system (1).

3. Communication system according to claim 2, **characterised in that** the line boards (6) are fully interconnected, with full switching capacity on each of said line boards (6).

4. Communication system according to claim 2, **characterised in that** the line boards (6) are partially interconnected in a star configuration, with the switching function implemented on a single board (6) only.

5. Communication system according to claim 2, **characterised in that** the line boards (6) are partially interconnected in a double star configuration, the communication system (1) comprising a main controller module (3) and a standby controller module (3') and a fractional switching function being implemented on said line boards (6).

6. Communication system according to claim 2, **characterised in that** the line boards (6) and the controller module (3) are geographically separated, individually incorporated in boxes and interconnected by Ethernet cables.

7. Communication system according to anyone of claims 2 to 6, **characterised in that** it comprises at least one voice line module (4), preferably implemented on a corresponding board (6), providing voice coding and packetisation functions and mainly composed of a processor (10) associated with a digital signal processor (11), analog line interfaces (12) and a multiport integrated switch (13).

8. Communication system according to anyone of claims 2 to 6, **characterised in that** it comprises at least one data line module (5), preferably implemented on a corresponding board (6), providing connection for Data Terminal Equipment or IP telephone sets and mainly composed of a multiport integrated switch (14) associated with a routing engine (15).

9. Communication system according to anyone of claims 1 to 8, **characterised in that** the packet switching means are based on LAN switch technology and components, and the internal transmission means are based on Ethernet links, in particular 10/100/1000 Base-T Ethernet links.

10. Communication system according to anyone of claims 1 to 9, **characterised in that** it is incorporated in a PBX or PABX unit.

11. Method for transmitting and switching data between at least two voice and/or non voice data communication terminals (2, 2') linked to an interconnecting communication system (1), directly or through an external, local or national communication network, wherein said method consists in switching and transmitting, inside said system (1), all data in the form of data packets.

12. Method according to claim 11, **characterised in that** a communication system (1) according to anyone of claims 2 to 10 is used.
